# FASCICULE DE BREVET EUROPEEN

(11) **EP 1 478 859 B1**
(45) Date de publication et mention de la délivrance du brevet: **13.09.2006**
(21) Numéro de dépôt: 03718913.1
(22) Date de dépôt: 27.02.2003
(51) Int. Cl.: F16B 5/00, E04B 1/61, E04C 2/54, F16S 1/02, E06B 3/54

(54) **ASSEMBLAGE D'ELEMENTS, NOTAMMENT VERRIERS**
ELEMENTVERBINDUNG, INSBESONDERE FÜR GLASELEMENTE
JOINTS OF ELEMENTS, PARTICULARLY GLASS ELEMENTS

(30) Priorité: 28.02.2002 FR 0202831
(43) Date de publication de la demande: 24.11.2004
(73) Titulaire: SAINT-GOBAIN GLASS FRANCE, 92400 Courbevoie (FR)
(72) Inventeur: LE BOT, Pierre, F-31500 Toulouse (FR); NUGUE, Jean-Clément, F-92400 Courbevoie (FR)
(74) Mandataire: Jamet, Vincent
(86) Numéro de dépôt international: PCT/FR2003/000633
(87) Numéro de publication internationale: WO 2003/072959

(56) Documents cités:
- EP-A- 0 715 037
- WO-A-02/18724
- DE-A- 4 444 428
- FR-A- 1 447 307
- GB-A- 2 135 007
- US-A- 2 544 983
- US-A- 5 357 728

## Description

L'invention se rapporte au domaine du vitrage et concerne plus particulièrement l'assemblage d'éléments notamment verriers, tels que des plaques, poutres, portiques, raidisseurs, contreventements, piliers...

Dans des domaines variés, mais en particulier dans le domaine du bâtiment, la réalisation d'éléments verriers est limitée par les dimensions auxquelles est disponible le matériau de base que constitue le verre flotté (verre « float ») : en général, une installation de production de verre float délivre des feuilles de verre dont la plus grande dimension est limitée à environ 6 mètres.

Ces éléments verriers peuvent être renforcés soit par un procédé thermique, soit par un procédé chimique.
Lorsque l'on souhaite réaliser une pièce en verre de plus grande dimension, il est indispensable de réaliser l'assemblage de plusieurs éléments individuels pour constituer un ensemble de la taille désirée. Notamment lorsque ces éléments font l'objet d'un renforcement thermique ou chimique.

Une première forme de réalisation de pièces de connexion repose sur le principe du pincement : deux éléments verriers sont pincés entre deux plaques de serrage avec interposition d'un intercalaire de friction. Cette solution présente un inconvénient de nature esthétique, puisque la pièce de connexion crée une interruption dans la transparence du verre.

Dans une autre forme de réalisation, on assemble des éléments verriers dans lesquels ont été pratiqués des perçages, au moyen de pièces de connexion insérées dans lesdits perçages, et qui sont en liaison avec l'épaisseur du verre. Un exemple de tel assemblage est décrit notamment dans la demande européenne EP- 0 887 484. Les éléments verriers sont toujours pris entre des pièces relativement fines en contact avec chaque face desdits éléments, dont la fonction n'est pas de serrer les éléments mais de permettre l'alignement des éléments pour compenser d'éventuels décalages dans le perçage des trous. On parvient ainsi à augmenter la visibilité à travers l'élément verrier, mais il subsiste néanmoins une gêne optique ou esthétique.

Selon encore une autre forme de réalisation, on assemble les éléments verriers par la réalisation d'une liaison mécanique avec une transmission de forces parallèlement au plan médian du verre et qui fait passer les efforts par le chant de l'élément verrier, à la manière de l'assemblage des pièces d'un puzzle.

Bien que cette solution d'assemblage par puzzle donne entière satisfaction sur le plan technique et notamment quant à la qualité et l'esthétique de l'assemblage, il arrive parfois, que compte tenu des tolérances de fabrications des éléments formant le puzzle, des jeux apparaissent notamment sous l'application d'effort et conduisent un mouvement de l'assemblage pouvant tendre au déboîtement de cet assemblage.

A cet égard, l'invention a pour objet un assemblage bord à bord entre des premier et second éléments sensiblement plans, tels que notamment des éléments de plaque, de poutre, de raidisseur, de portique ou de contreventement, les premier et/ou second éléments présentant au niveau de leurs bords au moins une découpe mâle et/ou une découpe femelle qui coopère de manière coplanaire avec une découpe femelle et/ou mâle de forme complémentaire, qui se caractérise en ce que la découpe est pourvue au niveau de son chant d'au moins une zone en relief adaptée pour recevoir un matériau structurel qui est adapté pour combler une zone en relief formée au niveau dudit chant et former un jonc de matière entre les premier et second éléments, afin d'éviter que ne se produise des mouvements de translation, des mouvements de rotation dans le plan des éléments, qui tendent à déboîter l'assemblage.

Selon l'invention, on entend par « sensiblement plan » que le premier ou second élément présente une extension suivant au moins une dimension, de préférence suivant deux dimensions, beaucoup plus grande que suivant la ou les dimensions restantes. Le premier ou second élément est donc de préférence une plaque ou un panneau en verre ou non, mais peut également être une poutre ou un poteau ou un portique ou un élément de structure lié au sol ou au plafond d'un édifice, dont la ou les surfaces peuvent être ouvragées, mais pour lesquels on peut définir au moins un plan médian. Le chant désigne la surface périphérique enveloppant l'épaisseur de l'élément.

L'expression « de manière coplanaire » signifie qu'une découpe mâle s'engage dans une découpe femelle de manière à former une surface sensiblement continue s'étendant dans ou parallèlement au plan médian.

Par « de forme complémentaire », il est entendu qu'une découpe mâle s'insère dans une découpe femelle, soit avec une possibilité de contact parfaitement continu des deux bords ainsi mis en vis-à-vis, soit avec une possibilité de contact même ponctuel sur une partie substantielle desdits bords.

En particulier, l'assemblage selon l'invention est tel que la liaison entre les premier ou second éléments n'est démontable que par déplacement des parties de découpe hors du plan des premier ou second éléments et après enlèvement de la clef de verrouillage.

L'assemblage selon l'invention procure non seulement un nouvel aspect très esthétique, la fonction d'assemblage étant masquée, mais permet en outre de réaliser des liaisons très efficaces, n'introduisant pas de contrainte excessive dans les éléments, notamment en verre et qui évite tout déboîtement intempestif de l'assemblage puzzle.

Dans des modes de réalisation préférés de l'invention, on peut éventuellement avoir recours en outre à l'une et/ou à l'autre des dispositions suivantes :
- la zone en relief est constituée par une forme, préférentiellement une saignée, cheminant sur le chant de la découpe,
- la découpe est pourvue d'au moins un logement adapté pour recevoir une clef de verrouillage,
- le logement s'étend d'une part selon une première partie sensiblement parallèle à la zone en relief et d'autre part selon une seconde partie sensiblement transversale à ladite zone en relief,
- la zone en relief est en forme de ligne sans point anguleux,
- la zone en relief suit un profil mâle et/ou femelle dans l'épaisseur du premier ou du second élément,
- les premier et/ou second éléments sont des éléments verriers,
- les premier et/ou second éléments sont des éléments de structure liés au sol ou au plafond d'un édifice,
- le matériau intercalaire est à base d'une résine ou d'un matériau élastomère ou d'une colle, éventuellement contenu dans une enveloppe en silicone ou analogue préférentiellement filtrant ou opaque au rayonnement UV,
- le matériau intercalaire est une chaîne à billes ou à rouleaux,
- les éléments verriers sont en verre monolithique trempé, ou durci ou recuit, ou bien en verre feuilleté.

D'autres détails et caractéristiques de l'invention apparaîtront de la description détaillée qui va suivre, faite en regard des dessins annexés sur lesquels :
- la figure 1 représente une vue d'un assemblage de premiers et seconds éléments selon l'invention pour constituer un raidisseur ;
- la figure 2 est une vue en perspective illustrant une zone d'assemblage par puzzle entre deux éléments représentés en figure 1 ;
- la figure 2A est une vue de détail et en perspective de la figure 2, illustrant particulièrement le montage d'un organe de verrouillage positionné au niveau du chant des premier et second éléments ;
- la figure 3 est une vue en perspective de l'organe de verrouillage représenté en figure 2A.
- la figure 4 est une vue du système de d'assemblage.

On précise que par un souci de clarté les différents éléments des objets représentés ne sont pas nécessairement reproduits à l'échelle.

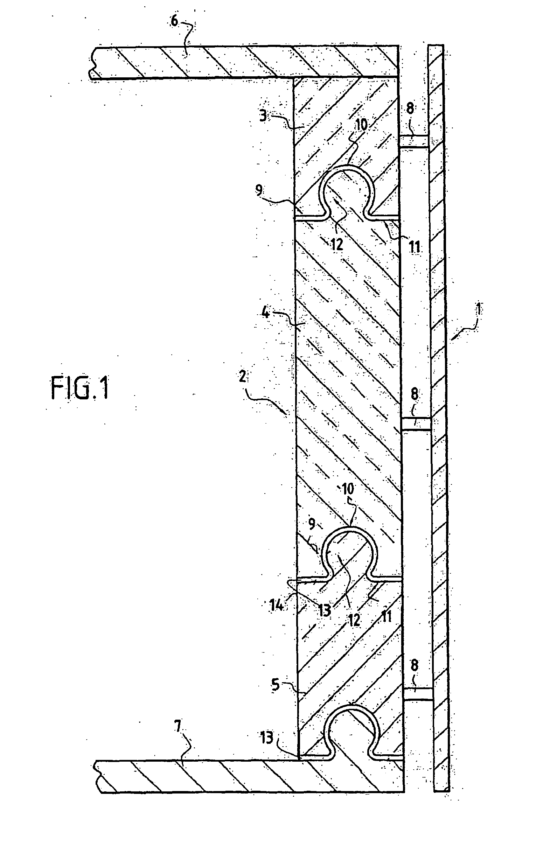

La figure 1 présente une vue de côté d'une façade 1 notamment vitrée, derrière laquelle est disposé un contreventement 2 fait de premier et de second éléments, notamment verriers 3,4,5 ou de structure 6 ou 7 Un premier élément supérieur 3 est fixé à un niveau supérieur 6 du gros oeuvre et un second élément inférieur 5 est fixé à un niveau inférieur 7 du gros oeuvre à un premier ou second élément relié à la structure de l'édifice au niveau du plafond ou du sol ou d'un élément intermédiaire. La liaison du contreventement 2 à la façade 1 peut être ponctuelle, représentée de manière très schématique par les pièces de liaison 8, et/ou continue.

Les premier et/ ou second éléments 3, 4, 5, lorsqu'ils sont en verre, sont constitués par des plaques qui peuvent être en verre monolithique trempé, ou bien durci ou recuit, transparent ou opacifié, coloré ou non ou bien encore en verre feuilleté.

Le raccordement bord à bord entre un premier élément 3 à un second élément 4 est réalisé comme suit.

Le bord inférieur 9 du premier élément 3 présente une découpe femelle 10 qui suit une ligne courbe approximativement en forme de champignon qui est faite du raccordement d'une première portion de cercle de rayon et dont le centre est situé à l'intérieur de la plaque de l'élément 3, d'une deuxième portion de cercle de rayon et dont le centre est situé à l'extérieur de la plaque 3 et d'une troisième portion de cercle de rayon et dont le centre est situé à l'intérieur de la plaque 3.

La découpe peut être réalisée dans un volume de verre parallélépipédique, par tout moyen connu en soi, notamment par découpe au jet d'eau.

Le bord supérieur 11 du second élément 4 présente une découpe mâle 12 qui suit la même ligne courbe approximativement en forme de champignon et qui est apte à s'insérer dans la découpe femelle 10 avec un jeu de l'ordre de 1 à 2 mm.

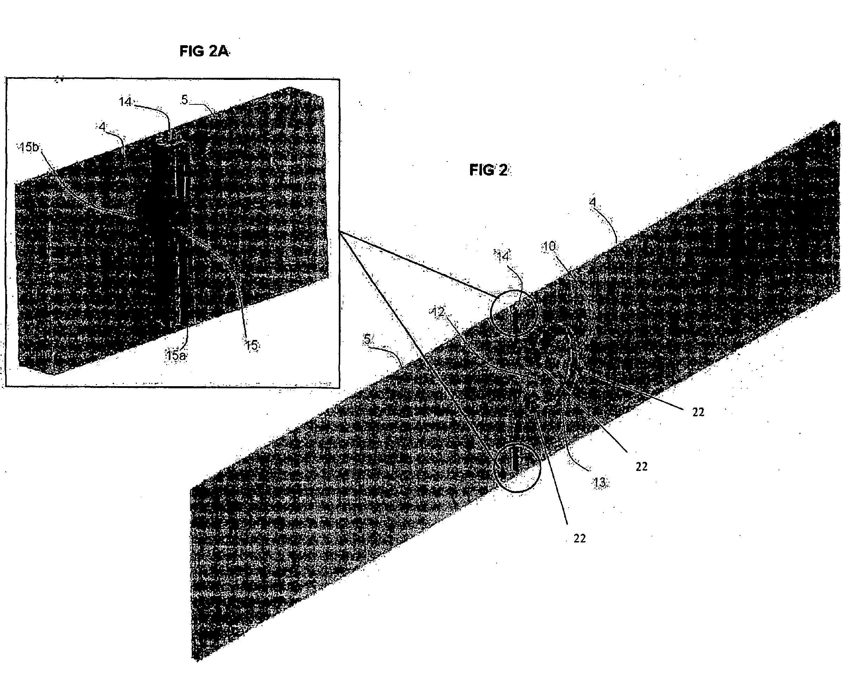

La figure 2 est une vue en perspective d'un assemblage de type puzzle entre des premier et second éléments représentés à la figure 1. Il apparaît en gris foncé une zone en relief qui est positionnée à l'interface de la zone de découpe 10.

Chacune des découpes 10, 12 est pourvue au niveau de son chant d'au moins une zone en relief 13 adaptée pour recevoir un matériau structurel 14.

La zone en relief 13 est constituée par une saignée cheminant sur le chant de la découpe 10 ou 12 ou selon un autre mode de réalisation non représenté sur les figures, il peut s'agir d'une zone en relief 13 qui coopère au niveau d'une zone en creux placée en regard, délimitant entre ces deux zones, une cavité pouvant être comblée par le matériau structurel 14.

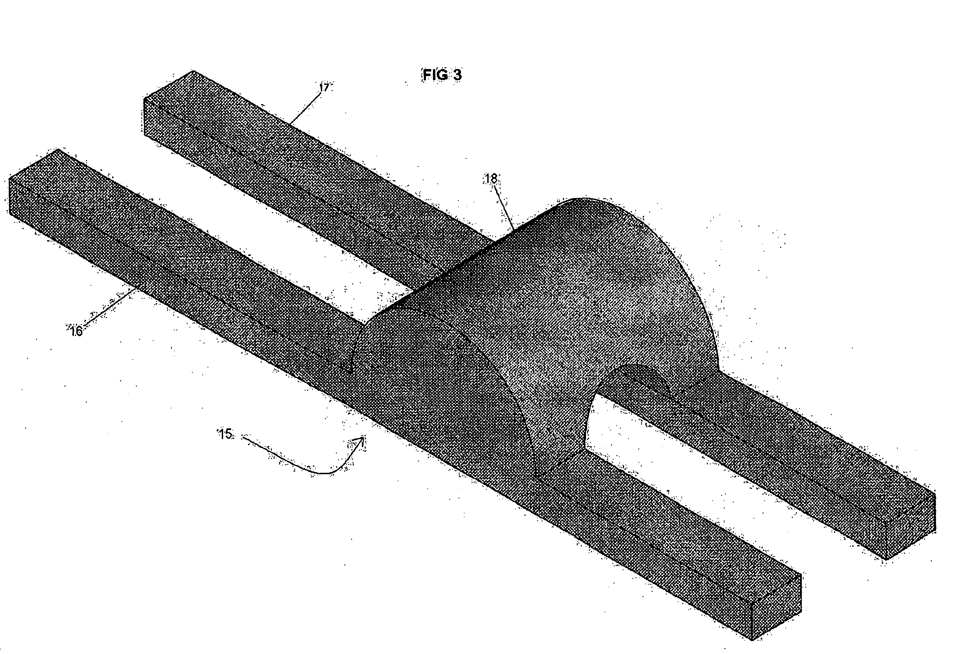

Sur le détail de réalisation, illustré en figure 2A, on prévoit de disposer au niveau de chaque extrémité libre de la découpe mâle et/ou femelle, sensiblement dans une partie droite de la découpe, au moins un logement adapté pour recevoir une clef de verrouillage 15 (représentée en détail à la figure 3).

Dans l'exemple représenté en figure 2A, le logement s'étend d'une part selon une première partie 15a sensiblement parallèle à la zone en relief 13 et d'autre part une seconde partie 15b sensiblement transversale à ladite zone en relief 13.

De cette manière, lorsque l'organe de verrouillage ou clef de verrouillage 15 est inséré dans ce logement, les premier et second éléments 4, 5 étant liés ensemble par l'assemblage réalisé au niveau des découpes 10, 12, il ne peut se produire ni des mouvements de translation, ni des mouvements de rotation dans le plan des éléments, qui tendent à déboîter l'assemblage.

En variante, et afin encore d'améliorer de réduire les déplacements, on prévoit d'interposer, un système de clef de verrouillage analogue au précédent, éventuellement pourvu d'un dispositif de réglage interne, à au moins à un endroit quelconque positionné dans la partie la plus droite de l'assemblage en puzzle (représenté par 22 en trait discontinu sur la figure 2).

Le matériau structurel 14 qui est adapté pour combler la zone en relief 13 forme un jonc de matière entre les premier et second éléments 4, 5, ce jonc de matière continu ou discontinu suivant les applications est constitué de résine, ou d'un élastomère ou encore d'une colle, éventuellement contenu ou inséré au sein d'une enveloppe de silicone ou analogue préférentiellement filtrant ou opaque au rayonnement UV.

En variante non représentée sur les figures, le matériau structurel 14 est formé par une chaîne à billes ou rouleaux qui chemine dans des circonvolutions de la zone en relief 13 à la manière d'un chemin de roulement.

Afin de faciliter le cheminement du matériau structurel 14, il est préférable que la zone en relief 13 soit en forme de ligne sans point anguleux.

La clef de verrouillage 15 est réalisée dans une matière plastique, préférentiellement transparente, voire translucide afin d'être aisément dissimulable au sein du logement réalisé en bout de la zone en relief 13. La clef de verrouillage 15 représentée en figure 3 comporte deux parties droites 16, 17 juxtaposées reliées entre-elles en partie centrale par l'intermédiaire d'une partie transversale 18 située au-dessus des parties droites 16, 17 afin de permettre le passage entre les parties droites juxtaposées 16, 17 du matériau structurel 14, comme illustré dans le détail de la figure 2A.

Sur la figure 1, chaque premier ou second élément ne possède qu'une forme mâle/femelle, il est possible en fonction de la longueur du bord de l'élément de réaliser une ligne de découpe reproduisant plusieurs fois ce motif le long du bord de l'élément verrier et comportant chacune au moins une zone en relief 13 munie de son matériau structurel 14.

En autre variante, il est possible de réaliser, le long de ladite découpe, une série d'autres découpes analogues mais de taille réduite, puis éventuellement une autre, etc. La ligne de découpe résultante de type fractale donne une ligne de jonction plus longue avec une multiplicité de points d'ancrage, qui permet de dissiper les contraintes sur une surface accrue.

On constate que l'assemblage selon l'invention représente une amélioration remarquable par rapport au système d'assemblage par puzzle et permet de se rapprocher très nettement des performances d'une unique plaque de dimensions équivalentes à la réunion des deux éléments.

Afin de faciliter l'assemblage des substrats verriers et notamment la mise en place des clefs de verrouillage, on propose un système de raidisseur et de pinces articulées ou des moyens de préhension à la fois en translation et/ou en rotation selon les 3 axes de l'espace, chacun des moyens de préhension étant solidaire d'un axe conformé par exemple par une tige filetée de manière à pouvoir régler son déplacement selon son axe. Les tiges filetées munies au niveau de leur extrémité libre des moyens de préhension sont réunies au sein d'un noeud de connexion éventuellement articulé en rotation.

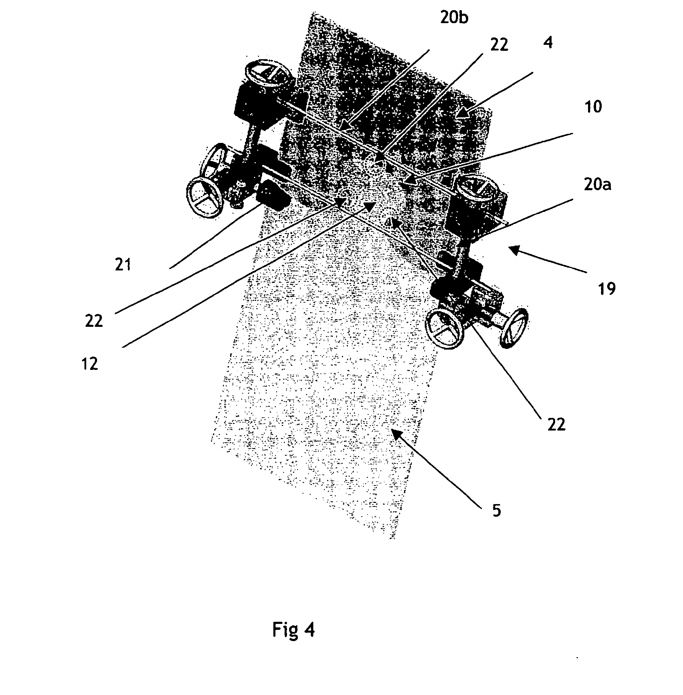

L'utilisateur positionne le système d'assemblage 19 (représenté en figure 4) au droit des substrats verriers et emprisonne à l'aide des moyens de préhension 21 une épaisseur de substrats. A l'aide des tiges 20a, 20b filetées et des noeuds de connexion, l'utilisateur procède au réglages dans les diverses dimensions de l'espace (réglage de planéité, réglage d'écartement...), il verrouille alors les substrats à l'aide de la clef de verrouillage.

Lorsque l'ensemble des substrats sont mécaniquement solidaires, il ôte le système d'assemblage 19.

L'invention, qui vient d'être décrite dans le cas particulier d'un assemblage bout à bout d'éléments, notamment verriers de contreventement, n'est nullement limitée à ce mode de réalisation. Elle s'applique également à l'assemblage d'autres éléments verriers ou non, notamment des poutres ou même des vitrages, par exemple de façade. Dans le cas d'éléments verriers longs, l'assemblage selon l'invention permet aussi bien des liaisons axiales, telles qu'il a été décrit et représenté, que des liaisons obliques ou orthogonales.

## Revendications

1. Assemblage bord à bord entre des premier et second éléments (3, 4, 5) sensiblement plans, tels que notamment des éléments de plaque, de poutre, de raidisseur, de portique ou de contreventement, les premier et/ou second éléments présentant au niveau de leurs bords au moins une découpe mâle (12) et/ou une découpe femelle (10) qui coopère de manière coplanaire avec une découpe femelle (10) et/ou mâle (12) de forme complémentaire, **caractérisé en ce que** la découpe (10 ;12) est pourvue au niveau de son chant d'au moins une zone en relief (13) adaptée pour recevoir un matériau structurel (14) qui est adapté pour combler une zone en relief (13) formée au niveau dudit chant et former un jonc de matière entre les premier et second éléments (4, 5), afin d'éviter que ne se produise des mouvements de translation, des mouvements de rotation dans le plan des éléments, qui tendent à déboîter l'assemblage.

2. Assemblage selon la revendication 1, **caractérisé en ce que** la zone en relief (13) est constituée par une forme, préférentiellement une saignée, cheminant sur le chant de la découpe (10 ;12).

3. Assemblage selon la revendication 1, **caractérisé en ce que** la découpe (10 ;12) est pourvue d'au moins un logement (15c) adapté pour recevoir une clef de verrouillage (15).

4. Assemblage selon la revendication 3, **caractérisé en ce que** le logement (15c) s'étend d'une part selon une première partie (15a) sensiblement parallèle à la zone en relief (13) et d'autre part selon une seconde partie (15b) sensiblement transversale à ladite zone en relief (13).

5. Assemblage selon la revendication 3, **caractérisé en ce qu'un** logement (22) est situé dans une zone droite de l'assemblage puzzle.

6. Assemblage selon l'une quelconque des revendications 1 à 4, **caractérisé en ce que** la zone en relief (13) est en forme de ligne sans point anguleux.

7. Assemblage selon l'une quelconque des revendications précédentes, **caractérisé en ce que** la zone en relief (13) suit un profil mâle et/ou femelle dans l'épaisseur du premier et/ou du second élément.

8. Assemblage selon l'une quelconque des revendications 1 à 7, **caractérisé en ce que** les premier et/ou second éléments sont des éléments verriers.

9. Assemblage selon l'une quelconque des revendications 1 à 7, **caractérisé en ce que** les premier et/ou second éléments sont des éléments de structure liés au sol ou au plafond d'un édifice.

10. Assemblage selon l'une quelconque des revendications précédentes, **caractérisé en ce que** le matériau intercalaire (13) est à base d'une résine ou d'un matériau élastomère ou d'une colle, éventuellement contenu dans une enveloppe en silicone ou analogue, préférentiellement filtrant ou opaque au rayonnement UV.

11. Assemblage selon l'une quelconque des revendications 1 à 9, **caractérisé en ce que** le matériau intercalaire (13) est une chaîne à billes ou à rouleaux.

12. Assemblage selon l'une quelconque des revendications précédentes, **caractérisé en ce que** les éléments verriers sont en verre monolithique trempé, ou durci ou recuit, ou bien en verre feuilleté,

## Claims

1. An edge-to-edge assembly of essentially planar first and second elements (3, 4, 5, such as in particular sheet, beam, stiffener, portico or bracing elements, the first and/or second elements having on their edges at least one male cutout (12) and/or one female cutout (10) that engages in a coplanar manner with a female cutout (10) and/or male cutout (12) of complementary shape, which assembly is **characterized in that** the cutout (10; 12) is provided on its edge with at least one relief zone (13) capable of receiving a structural material (14) designed to fill a relief zone (13) formed at said edge and of forming a rod of material between the first and second elements (4, 5) to prevent translational movements and rotational movements in the plane of the elements that would tend to separate the assembly.

2. The assembly as claimed in claim 1, **characterized in that** the relief zone (13) is a form, preferably a chase, extending along the edge of the cutout (10; 12).

3. The assembly as claimed in claim 1, **characterized in that** the cutout (10; 12) is provided with at least one housing (15c) designed to receive a locking key (15).

4. The assembly as claimed in claim 3, **characterized in that** the housing (15c) extends partly as a first part (15a) essentially parallel to the relief zone (13) and partly as a second part (15b) essentially at right angles to said relief zone (13).

5. The assembly as claimed in claim 3, **characterized in that** a housing (22) is situated in a straight zone of the jigsaw assembly.

6. The assembly as claimed in any one of claims 1 to 4, **characterized in that** the relief zone (13) is in the form of a line without angular points.

7. The assembly as claimed in any one of the preceding claims, **characterized in that** the relief zone (13) follows a male and/or female profile in the thickness of the first and/or second element(s).

8. The assembly as claimed in any one of claims 1 to 7, **characterized in that** the first and/or second elements are glass elements.

9. The assembly as claimed in any one of claims 1 to 7, **characterized in that** the first and/or second elements are structural elements connected to the floor or ceiling of a building.

10. The assembly as claimed in any one of the preceding claims, **characterized in that** the intermediate material (13) is based on a resin or on an elastomeric material or on an adhesive, optionally contained in a silicone envelope or the like, preferably one that filters or is opaque to UV radiation.

11. The assembly as claimed in any one of claims 1 to 9, **characterized in that** the intermediate material (13) is a ball chain or roller chain.

12. The assembly as claimed in any one of the preceding claims, **characterized in that** the glass elements are made of tempered or hardened or annealed monolithic glass, or of laminated glass.

## Patentansprüche

1. Aneinander anstoßende Verbindung von einem ersten mit einem zweiten Element (3, 4, 5), die im Wesentlichen flach sind, wie insbesondere Platten-, Träger-, Versteifungs-, Rahmen- oder Querverstrebungselemente, wobei das erste und/oder zweite Element an seinem Rand (ihren Rändern) mindestens einen vorstehenden (12) Abschnitt und/oder einen vertieften Abschnitt (10) aufweist (aufweisen), der coplanar mit einem vertieften (10) und/oder vorstehenden Abschnitt (12) mit komplementärer Form zusammenwirkt, **dadurch gekennzeichnet, dass** der Abschnitt (10; 12) an seiner Kante mit mindestens einem Reliefbereich (13) versehen ist, der geeignet ist, ein Konstruktionsmaterial (14) aufzunehmen, das geeignet ist, einen an der Kante gebildeten Reliefbereich (13) auszufüllen und eine stoffliche Verbindung zwischen dem ersten und dem zweiten Element (4, 5) zu bilden, um zu vermeiden, dass hin- und hergehende und Drehbewegungen in der Ebene der Elemente auftreten, die zur Lockerung der Verbindung führen würden.

2. Verbindung nach Anspruch 1, **dadurch gekennzeichnet, dass** der Reliefbereich (13) aus einer Form, vorzugsweise einer Fuge, besteht, die auf die Kante des Abschnitts (10; 12) führt.

3. Verbindung nach Anspruch 1, **dadurch gekennzeichnet, dass** der Abschnitt (10; 12) mit mindestens einer Aufnahme (15c) versehen ist, die geeignet ist, einen Verriegelungsschlüssel (15) aufzunehmen.

4. Verbindung nach Anspruch 3, **dadurch gekennzeichnet, dass** die Aufnahme (15c) sich einerseits in einem ersten Teil (15a) im Wesentlichen parallel zu dem Reliefbereich (13) und andererseits in einem zweiten Teil (15b) im Wesentlichen quer zu dem Reliefbereich (13) erstreckt.

5. Verbindung nach Anspruch 3, **dadurch gekennzeichnet, dass** sich eine Aufnahme (22) in einem geraden Bereich der Puzzleverbindung befindet.

6. Verbindung nach einem der Ansprüche 1 bis 4, **dadurch gekennzeichnet, dass** der Reliefbereich (13) die Form einer Linie ohne einen winkligen Punkt besitzt.

7. Verbindung nach einem der vorhergehenden Ansprüche, **dadurch gekennzeichnet, dass** der Reliefbereich (13) einem vorstehenden und/oder vertieften Profil in der Dicke des ersten und/oder zweiten Elements folgt.

8. Verbindung nach einem der Ansprüche 1 bis 7, **dadurch gekennzeichnet, dass** das erste und/oder zweite Element (ein) Verglasungselement(e) ist (sind).

9. Verbindung nach einem der Ansprüche 1 bis 7, **dadurch gekennzeichnet, dass** das erste und/oder zweite Element (ein) Bauelement(e) ist (sind), das (die) mit dem Boden oder der Decke eines Bauwerks verbunden ist (sind).

10. Verbindung nach einem der vorhergehenden Ansprüche, **dadurch gekennzeichnet, dass** das Zwischenmaterial (13) auf der Basis eines Harzes, eines Elastomers oder eines Klebstoffs ist, gegebenenfalls sich in einer Hülle aus Silicon oder dergleichen befindet und vorzugsweise die UV-Strahlung filtert oder ihr gegenüber opak ist.

11. Verbindung nach einem der Ansprüche 1 bis 9, **dadurch gekennzeichnet, dass** das Zwischenmaterial (13) eine Kugel- oder Rollenkette ist.

12. Verbindung nach einem der vorhergehenden Ansprüche, **dadurch gekennzeichnet, dass** die Verglasungselemente aus einem vorgespannten, ausgehärteten oder im Kühlofen abgekühlten monolithischen Glas oder aus Verbundglas bestehen.
